# EUROPÄISCHE PATENTSCHRIFT

(11) **EP 0 912 637 B1**
(45) Veröffentlichungstag und Bekanntmachung des Hinweises auf die Patenterteilung: **10.04.2002**
(21) Anmeldenummer: 97928216.7
(22) Anmeldetag: 17.06.1997
(51) Int. Cl.: C09B 67/00, D06P 3/32, D06P 1/39

(54) **FARBSTOFFMISCHUNGEN, ENTHALTEND POLYAZOFARBSTOFFE UND DEN FARBSTOFF C.I. SULPHUR BLACK 1**
DYE MIXTURES CONTAINING POLYAZO DYES AND CI SULPHUR BLACK 1 DYE
MELANGES DE COLORANTS CONTENANT DES COLORANTS POLYAZOIQUES ET LE COLORANT NOIR AU SOUFRE 1 CI

(30) Priorität: 01.07.1996 DE 19626318
(43) Veröffentlichungstag der Anmeldung: 06.05.1999
(73) Patentinhaber: BASF AKTIENGESELLSCHAFT, 67056 Ludwigshafen (DE)
(72) Erfinder: WIESENFELDT, Matthias, D-67125 Dannstadt-Schauernheim (DE); DIX, Johannes, Peter, D-67273 Weisenheim (DE); STREICHER, Rolf, D-67549 Worms (DE); HERRMANN, Manfred, D-67061 Ludwigshafen (DE); LAMM, Gunther, D-67454 Ha loch (DE)
(86) Internationale Anmeldenummer: EP9703136
(87) Internationale Veröffentlichungsnummer: WO9800465

(56) Entgegenhaltungen:
- EP-A- 0 042 922
- EP-A- 0 433 229
- DE-A- 19 530 176
- DE-A- 19 548 785
- FR-A- 2 206 359
- GB-A- 2 170 229
- US-A- 4 816 034

## Beschreibung

Die vorliegende Erfindung betrifft neue Farbstoffmischungen, enthaltend den Farbstoff der Formel I 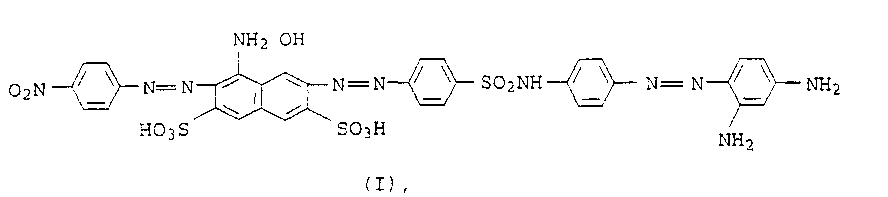 den Farbstoff C.I. Sulphur Black 1 (53 185), mindestens einen Disazofarbstoff der Formel II 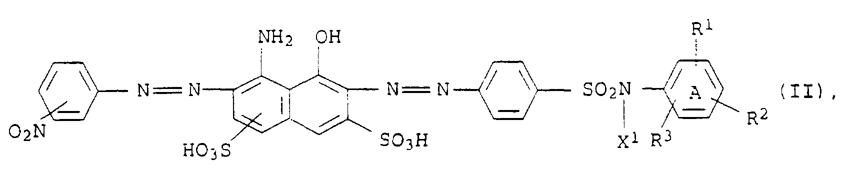 in der
der Ring A benzoanelliert sein kann,
- X¹: Wasserstoff oder C₁-C₄-Alkyl.
- R¹: Wasserstoff, C₁-C₄-Alkyl, Halogen, Carboxyl, C₁-C₄-Alkoxycarbonyl oder Hydroxysulfonyl,
- R²: Wasserstoff, C₁-C₄-Alkyl, Halogen, Carboxyl oder C₁-C₄-Alkoxycarbonyl oder R¹ und R² zusammen einen Rest der Formel L¹-NZ¹-CO, worin L¹ für Methylen oder Carbonyl und Z¹ für C₁-C₄-Alkyl, das durch C₁-C₄-Alkoxy substituiert sein kann, oder gegebenenfalls durch C₁-C₄-Alkyl oder C₁-C₄-Alkoxy substituiertes Phenyl stehen, und
- R³: Wasserstoff, C₁-C₄-Alkyl, Hydroxy, C₁-C₄-Alkoxy, Phenoxy, C₁-C₄-Alkanoyloxy oder Benzoyloxy bedeuten,
sowie mindestens einen Polyazofarbstoff der Formel III 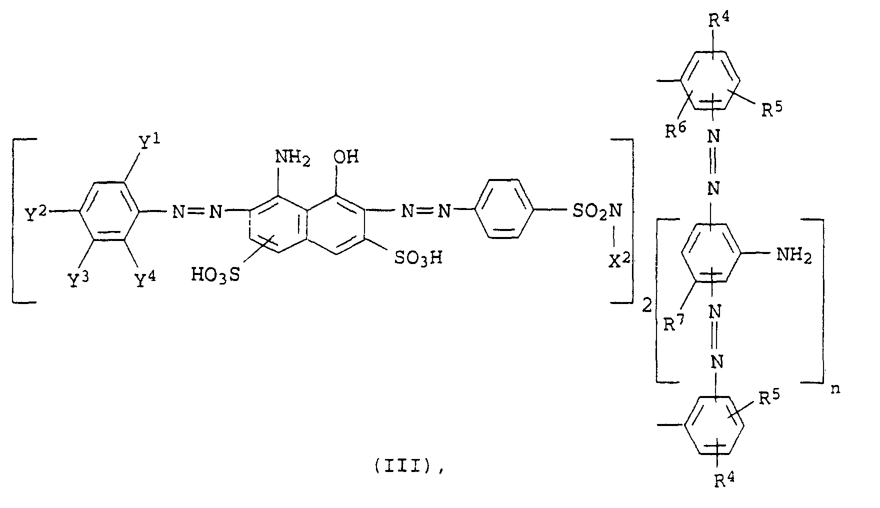 in der
- n: 0 oder 1,
- Y¹: Wasserstoff, Hydroxysulfonyl, Pyrrolidinylsulfonyl, Piperidinylsulfonyl, Morpholinylsulfonyl oder einen Rest der Formel SO₂-Alk, SO₂-Ar, SO₂-N(Alk)₂, SO₂-N(Alk)Ar, SO₂-OAr, SO₂-C₂H₄-Q, SO₂-CH=CH₂, SO₂-CH₂CH=CH₂, CO-Ar,

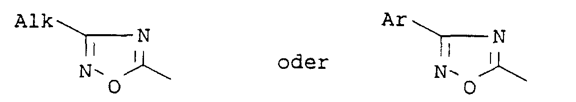

- Y²: Nitro, einen Rest der Formel SO₂-NHAr oder den Rest Y¹,
- Y³: Wasserstoff, Hydroxysulfonyl, Pyrrolidinylsulfonyl, Piperidinylsulfonyl, Morpholinylsulfonyl oder einen Rest der Formel SO₂-Alk, SO₂-N(Alk)₂, SO₂-NHAlk, SO₂-CH₂COOH, SO₂-C₂H₄-Q, SO₂-CH=CH₂, SO₂-CH₂CH=CH₂, CO-Ar oder CO-NHAlk oder Y³ und Y² zusammen einen Rest der Formel L²-NZ²-CO oder L²-O-CO,
- Y⁴: Wasserstoff oder Y⁴ und Y³ zusammen einen Rest der Formel L²-NZ²-CO,
- X²: Wasserstoff oder C₁-C₄-Alkyl,
- R⁴: Wasserstoff, C₁-C₄-Alkyl, Halogen, Carboxyl, C₁-C₄-Alkoxycarbonyl oder Hydroxysulfonyl,
- R⁵: Wasserstoff, C₁-C₄-Alkyl, Halogen, Carboxyl oder C₁-C₄-Alkoxycarbonyl oder R² und R¹ zusammen einen Rest der Formel L²-NZ²-CO,
- R⁶: Wasserstoff, Hydroxy, C₁-C₄-Alkoxy, C₁-C₄-Alkanoyloxy oder Benzoyloxy und
- R⁷: Wasserstoff, Amino oder Hydroxy bedeuten, wobei
- Alk: für C₁-C₈-Alkyl, das durch ein bis drei Sauerstoffatome in Etherfunktion oder durch ein Schwefelatom oder eine Sulfonylgruppe unterbrochen und durch Hydroxy, C₁-C₄-Alkanoyloxy, Benzoyloxy, Sulfato, Halogen, Cyano, Carboxyl oder Phenyl substituiert sein kann,
- Ar: für Phenyl, das durch C₁-C₄-Alkyl, C₁-C₄-Alkoxy, Halogen, Carboxyl, C₁-C₄-Alkanoylamino oder Hydroxysulfonyl substituiert sein kann,
- L²: für Methylen oder Carbonyl,
- Z²: für Wasserstoff, Naphthyl, C₅-C₈-Cycloalkyl oder einen Rest der Formel Alk oder Ar und
- Q: für Hydroxy oder eine unter alkalischen Reaktionsbedingungen abspaltbare Gruppe stehen,
sowie ihre Verwendung zum Färben von natürlichen oder synthetischen Substraten.

Der Farbstoff der Formel I weist beim Färben von Leder noch anwendungstechnische Mängel auf. Er zeigt insbesondere ein schlechtes Durchfärbevermögen.

Aufgabe der vorliegenden Erfindung war es daher, neue Farbstoffmischungen bereitzustellen, die den Farbstoff der Formel I enthalten und den obengenannten Nachteil nicht mehr aufweisen.

Demgemäß wurden die eingangs näher bezeichneten Farbstoffmischungen gefunden.

Alle in den obengenannten Formeln II und III auftretenden Alkylgruppen können sowohl geradkettig als auch verzweigt sein.

Wenn in den obengenannten Formeln substituierte Alkylreste auftreten, so weisen sie in der Regel ein oder zwei Substituenten auf.

Wenn in der obengenannten Formel III Alkylreste auftreten, die durch Sauerstoffatome in Etherfunktion unterbrochen sind, so sind solche Alkylreste bevorzugt, die durch ein oder zwei Sauerstoffatome in Etherfunktion unterbrochen sind.

Wenn in den obengenannten Formeln substituierte Phenylreste auftreten, so weisen sie in der Regel ein bis drei Substituenten auf.

Die Reste R⁴, R⁵, X², Y¹, Y², Y³ und Y⁴ sind in der obengenannten Formel III jeweils zweimal vorhanden. Sie sind voneinander unabhängig und können jeweils gleich oder verschieden sein.

Wenn die Formel III Y² und Y³ oder Y³ und Y⁴ jeweils zusammen den Rest der Formel L²-NZ²-CO bedeuten, so kann dieser Rest jeweils über L² oder CO an die Ringpositionen von Y², Y³ und Y⁴ geknüpft sein.

Reste R¹, R², R³, R⁴, R⁵, X¹, X², Z¹ und Alk sind z.B. Methyl, Ethyl, Propyl, Isopropyl, Butyl, Isobutyl, sec-Butyl oder tert-Butyl.

Reste Z¹ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxybutyl, 2- oder 3-Butoxypropyl, 2- oder 4-Methoxybutyl, 2-oder 4-Ethoxybutyl, 2- oder 4-Propoxybutyl, 2- oder 4-Butoxybutyl, Phenyl, 2-, 3- oder 4-Methylphenyl, 2,4-Dimethylphenyl, 2-, 3- oder 4-Methoxyphenyl oder 2,4-Dimethoxyphenyl.

Reste Alk sind z.B. Pentyl, Isopentyl, Neopentyl, tert-Pentyl, Hexyl, 2-Methylpentyl, Heptyl, 1-Ethylpentyl, Octyl, 2-Ethylhexyl, Isooctyl (Die obige Bezeichnung Isooctyl ist eine Trivialbezeichnung und stammt von den nach der Oxosynthese erhaltenen Alkoholen - vgl. dazu Ullmann's Encyclopedia of Industrial Chemistry, 5th Edition, Vol. A 1, Seiten 290 bis 293, sowie Vol. A 10, Seiten 284 und 285), 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 3,6,9-Trioxadecyl, 3,6,9-Trioxaundecyl, 2-Methylthioethyl, 2-Ethylthioethyl, 2- oder 3-Methylthiopropyl, 2- oder 3-Ethylthiopropyl, 2- oder 4-Methylthiobutyl, 2- oder 4-Ethylthiobutyl, 2-Methylsulfonylethyl, 2-Ethylsulfonylethyl, 2- oder 3-Methylsulfonylpropyl, 2- oder 3-Ethylsulfonylpropyl, 2- oder 4-Methylsulfonylbutyl, 2- oder 4-Ethylsulfonylbutyl, Chlormethyl, 2-Chlorethyl, 2- oder 3-Chlorpropyl, Benzyl, 1- oder 2-Phenylethyl, 3-Benzyloxypropyl, 2-Hydroxyethyl, 2- oder 3-Hydroxypropyl, Cyanomethyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, Carboxylmethyl, 2-Carboxylethyl, 2- oder 3-Carboxylpropyl, 2-Sulfatoethyl oder 2- oder 3-Sulfatopropyl.

Reste R¹, R², R⁴ und R⁵ sind z.B. Fluor, Chlor, Brom, Methoxycarbonyl, Ethoxycarbonyl, Propoxycarbonyl, Isopropoxycarbonyl oder Butoxycarbonyl.

Reste Ar sind z.B. Phenyl, 2-, 3- oder 4-Methylphenyl, 2-, 3- oder 4-Ethylphenyl, 2-, 3- oder 4-Propylphenyl, 2-, 3-oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Formylaminophenyl, 2-, 3- oder 4-Acetylaminophenyl, 2-, 3-oder 4-Propionylaminophenyl, 2-, 3- oder 4-Chlorphenyl, 2-, 3-oder 4-Carboxyphenyl oder 2-, 3- oder 4-Hydroxysulfonylphenyl.

Reste Z² sind z.B. Cyclopentyl, Cyclohexyl, Cycloheptyl oder Cyclooctyl.

Reste R³ und R⁶ sind z.B. Methoxy, Ethoxy, Propoxy, Isopropoxy, Butoxy, Isobutoxy, sec-Butoxy, Formyloxy, Acetyloxy, Propionyloxy, Butyryloxy oder Isobutyryloxy.

Der Rest Q steht für Hydroxy oder eine unter alkalischen Reaktionsbedingungen abspaltbare Gruppe. Solche Gruppen sind z.B. Chlor, Brom, C₁-C₄-Alkylsulfonyl, Phenylsulfonyl, OSO₃H, SSO₃H, OP(O)(OH)₂, C₁-C₄-Alkylsulfonyloxy, Phenylsulfonyloxy, C₁-C₄-Alkanoyloxy, C₁-C₄-Dialkylamino oder ein Rest der Formel 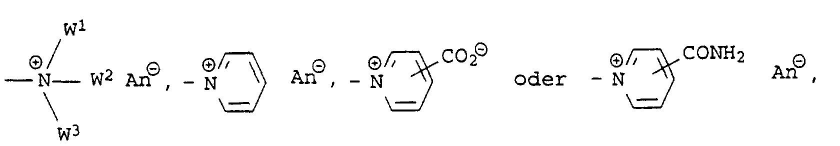 wobei W¹, W² und W³ unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methylsulfonat, Phenylsulfonat oder 2- oder 4-Methylphenylsulfonat in Betracht kommen.

Reste Y¹ sind z.B. N-Phenyl-N-methylsulfamoyl, N-Phenyl-N-ethylsulfamoyl, N-Phenyl-N-propylsulfamoyl, N-Phenyl-N-butylsulfamoyl, 3-Methyl-, 3-Ethyl-, 3-Propyl-, 3-Butyl- oder 3-Phenyl-1,2,4-oxadiazol-5-yl, Phenoxysulfonyl, 2-, 3- oder 4-Methylphenoxysulfonyl, Phenylsulfonyl, 2-, 3- oder 4-Methylphenylsulfonyl oder 2,3-, 2,4-, 2,5-, 2,6-, 3,4- oder 3,5-Dimethylphenylsulfonyl.

Reste Y¹ und Y³ sind, z.B. Dimethylsulfamoyl, Diethylsulfamoyl, Dipropylsulfamoyl, Dibutylsulfamoyl, N-Methyl-N-ethylsulfamoyl, Bis(2-hydroxyethyl)-sulfamoyl, Bis(carboxylmethyl)-sulfamoyl, Bis(2-carboxyethyl)-sulfamoyl, Methylsulfonyl, Ethylsulfonyl, Propylsulfonyl, Isopropylsulfonyl, Butylsulfonyl, 2-Hydroxyethylsulfonyl, 2-Chlorethylsulfonyl, 2-Sulfatoethylsulfonyl, Benzoyl-, 2-, 3- oder 4-Methylbenzoyl oder 2,3-, 2,4-, 2,5-, 2,6-, 3,4-oder 3,5-Dimethylbenzoyl.

Reste Y³ sind z.B. Methylsulfamoyl, Ethylsulfamoyl, Propylsulfamoyl, Isopropylsulfamoyl, Butylsulfamoyl, 2-Hydroxyethylsulfamoyl, Carboxymethylsulfamoyl, 2-Carboxyethylsulfamoyl, Methylcarbamoyl, Ethylcarbamoyl, Propylcarbamoyl, Isopropylcarbamoyl, Butylcarbamoyl, 2-Hydroxyethylcarbamoyl, Carboxymethylcarbamoyl oder 2-Carboxyethylcarbamoyl.

Reste Y² sind z.B. Phenylsulfamoyl oder 2-, 3- oder 4-Methylphenylsulfamoyl.

Reste 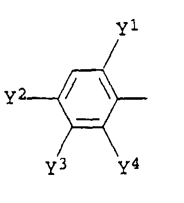 gehorchen z.B. den Formeln

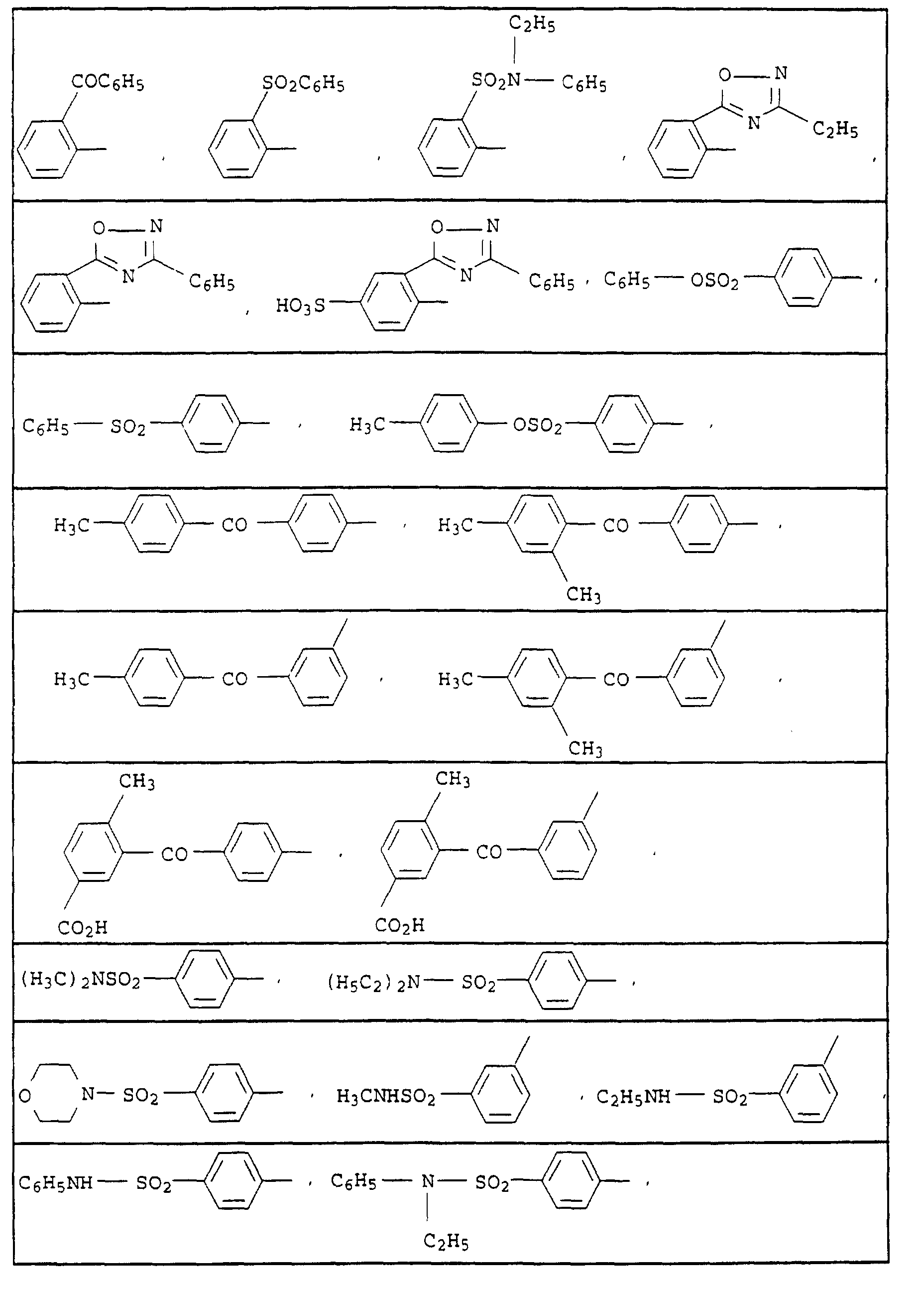

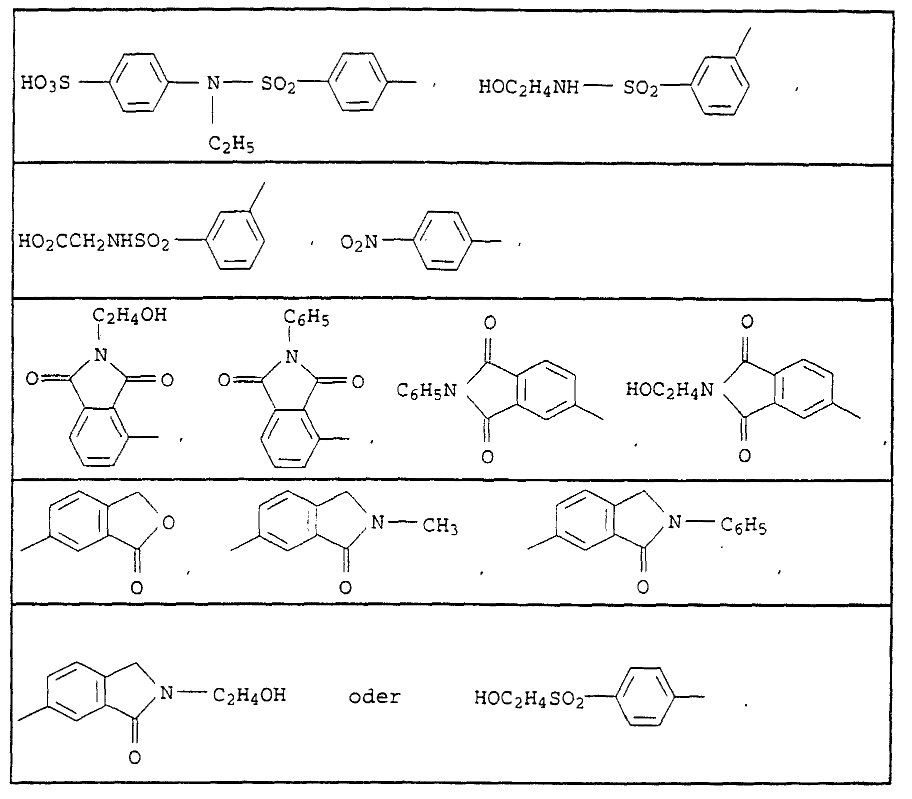

Da die Farbstoffe der Formeln I, II und III mehrere Hydroxysulfonylgruppen enthalten, sind auch deren Salze von der Erfindung mit umfaßt.

Als Salze kommen dabei Metall- oder Ammoniumsalze in Betracht. Metallsalze sind insbesondere die Lithium-, Natrium- oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium- oder Piperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch ein oder zwei Hydroxylgruppen substituiert und/oder durch ein bis vier Sauerstoffatome in Etherfunktion unterbrochen sein kann.

Diese Salze sind auch zu nennen, wenn in den Farbstoffen der Formeln I, II und III die Gruppierung 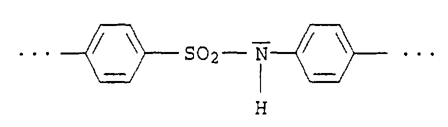 in Salzform vorliegt.

Vorzugsweise liegen die Salze in Form der Lithium-, Natrium- oder Kaliumsalze vor.

Bevorzugte Mischungspartner sind Disazofarbstoffe der Formel IIa 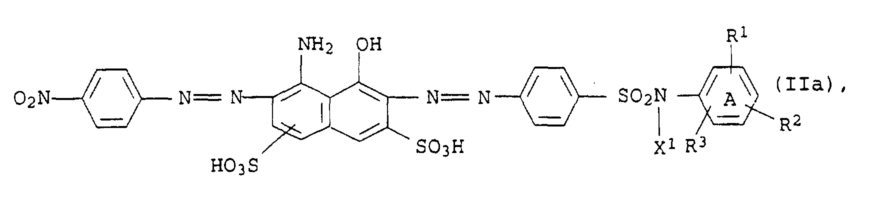 in der der Ring A, X¹, R¹, R² und R³ jeweils die obengenannte Bedeutung besitzen.

Weiterhin bevorzugte Mischungspartner sind Disazofarbstoffe der Formel IIb 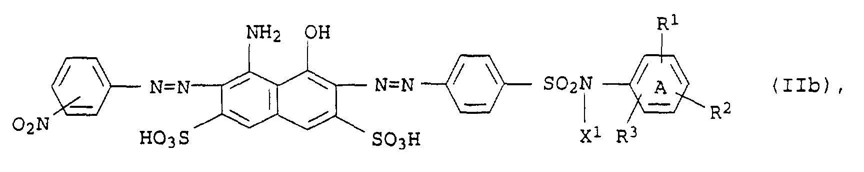 in der der Ring A, X¹, R¹, R² und R³ jeweils die obengenannte Bedeutung besitzen.

Weiterhin bevorzugte Mischungspartner sind Disazofarbstoffe der Formel II, in der R¹ Wasserstoff, Methyl, Carboxyl, C₁oder C₂-Alkoxycarbonyl oder Hydroxysulfonyl bedeutet.

Weiterhin bevorzugte Mischungspartner sind Disazofarbstoffe der Formel II, in der R² Wasserstoff, Methyl, Carboxyl oder C₁- oder C₂-Alkoxycarbonyl bedeutet.

Weiterhin bevorzugte Mischungspartner sind Disazofarbstoffe der Formel II, in der R³ Wasserstoff oder Hydroxy bedeutet.

Weiterhin bevorzugte Mischungspartner sind Disazofarbstoffe der Formel II, in der der Ring A nicht benzoanelliert ist.

Weiterhin bevorzugte Mischungspartner sind Disazofarbstoffe der Formel II, in der mindestens einer der Reste R¹, R² und R³ von Wasserstoff verschieden ist.

Weiterhin bevorzugte Mischungspartner sind Disazofarbstoffe der Formel II, in der X¹ Wasserstoff bedeutet.

Besonders bevorzugte Mischungspartner sind Disazofarbstoffe der Formel II, in der R³ Hydroxy bedeutet.

Ganz besonders bevorzugte Mischungspartner sind Disazofarbstoffe der Formel II, in der R¹ und R² jeweils Wasserstoff und R³ Hydroxy bedeuten.

Von besonderem technischen Interesse als Mischungspartner sind Disazofarbstoffe, die der Formel IIc 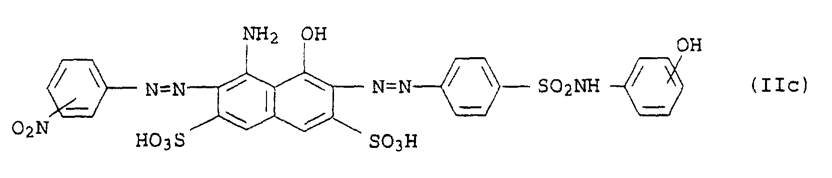 gehorchen, wobei der Farbstoff der Formel IId 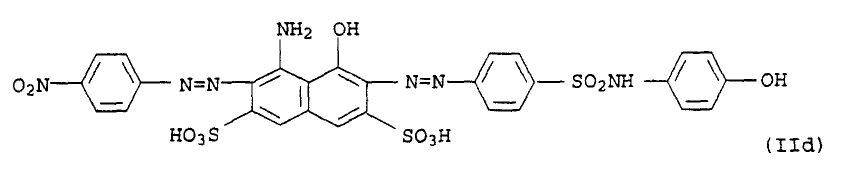 ganz besonders hervorzuheben ist.

Bevorzugte Mischungspartner sind Polyazofarbstoffe der Formel IIIa 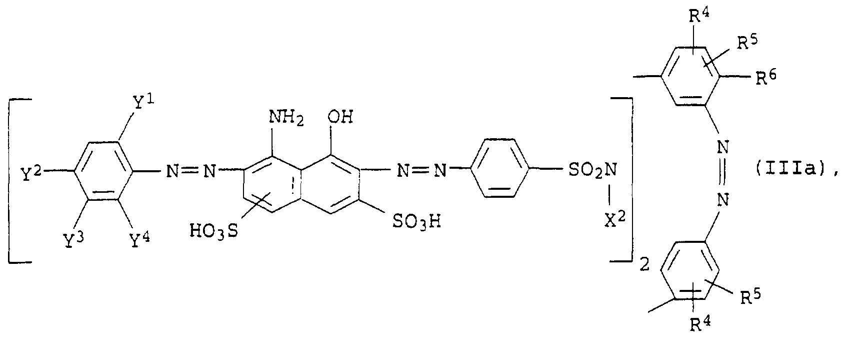 in der Y¹, Y², Y³, Y⁴, X², R⁴, R⁵ und R⁶ jeweils die obengenannte Bedeutung besitzen.

Weiterhin bevorzugte Mischungspartner sind Polyazofarbstoffe der Formel IIIb 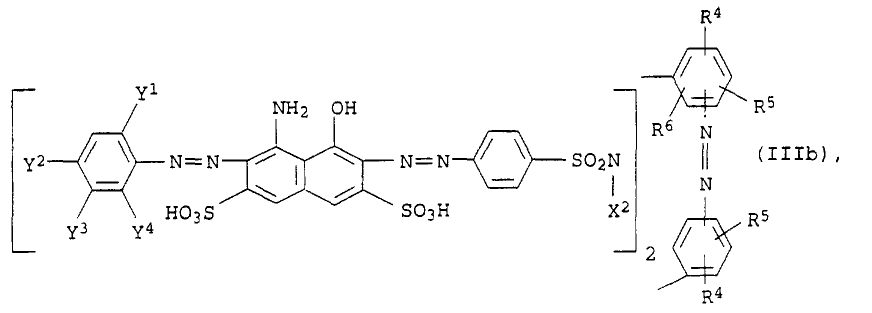 in der Y¹, Y², Y³, Y⁴, X², R⁴, R⁵ und R⁶ jeweils die obengenannte Bedeutung besitzen.

Weiterhin bevorzugte Mischungspartner sind Polyazofarbstoffe der Formel III, in der R⁴ und R⁵ jeweils Wasserstoff bedeutet.

Weiterhin bevorzugte Mischungspartner sind Polyazofarbstoffe der Formel III, in der R⁶ Hydroxy bedeutet.

Weiterhin bevorzugte Mischungspartner sind Polyazofarbstoffe der Formel III, in der Y¹ Wasserstoff, Hydroxysulfonyl oder einen Rest der Formel 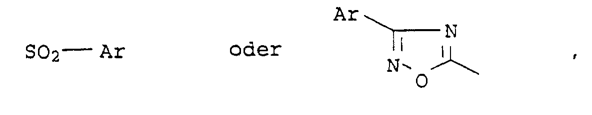 worin Ar jeweils die obengenannte Bedeutung besitzt, bedeutet.

Weiterhin bevorzugte Mischungspartner sind Polyazofarbstoffe der Formel III, in der Y² Wasserstoff, Hydroxysulfonyl, Nitro oder einen Rest der Formel SO₂-N(Alk)₂, SO₂-C₂H₄-Q oder SO₂-CH=CH₂, worin Alk und Q jeweils die obengenannte Bedeutung besitzen, bedeutet.

Weiterhin bevorzugte Mischungspartner sind Polyazofarbstoffe der Formel III, in der Y³ Wasserstoff, Hydroxysulfonyl oder einen Rest der Formel SO₂-C₂H₄-Q oder SO₂-CH=CH₂ oder Y³ und Y² zusammen einen Rest der Formel L²-NZ²-CO bedeuten, wobei L², Q und Z² jeweils die obengenannte Bedeutung besitzen.

Weiterhin bevorzugte Mischungspartner sind Polyazofarbstoffe der Formel III, in der Z² C₁-C₄-Alkyl, das gegebenenfalls durch Hydroxy substituiert ist, oder Phenyl bedeutet.

Besonders bevorzugte Mischungspartner sind Polyazofarbstoffe der Formel III, in der X² Wasserstoff bedeutet.

Besonders bevorzugte Mischungspartner sind Polyazofarbstoffe der Formel III, in der R⁶ Hydroxy bedeutet.

Ganz besonders bevorzugte Mischungspartner sind Polyazofarbstoffe der Formel III, in der R⁴ und R⁵ jeweils Wasserstoff und R⁶ Hydroxy bedeuten.

Von besonderem technischen Interesse als Mischungspartner sind Polyazofarbstoffe, die der Formel IIIc 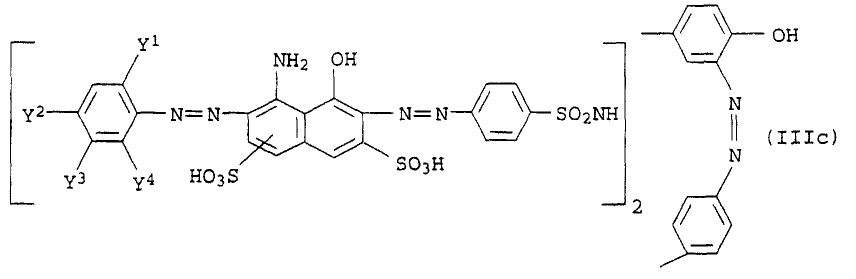 gehorchen, worin Y¹, Y², Y³ und Y⁴ jeweils die obengenannte Bedeutung besitzen.

Von besonderem technischen Interesse als Mischungspartner sind Polyazofarbstoffe der Formel IIIa, in der Y² Nitro und Y¹, Y³ und Y⁴ jeweils Wasserstoff bedeuten.

Hervorzuheben sind Farbstoffmischungen, enthaltend, jeweils bezogen auf das Gewicht der Farbstoffmischung, 19 bis 60 Gew.-%, vorzugsweise 29 bis 60 Gew.-% und insbesondere 29 bis 50 Gew.-% Farbstoff der Formel I, 30 bis 80 Gew.-%, vorzugsweise 39 bis 70 Gew.-% und insbesondere 49 bis 70 Gew.-% C.I. Sulphur Black 1 (53 185), 0,1 bis 5 Gew.-% vorzugsweise 0,2 bis 4 Gew.-% und insbesondere 0,5 bis 2 Gew.-% mindestens eines Farbstoffs der Formel II sowie 0,1 bis 5 Gew.-%, vorzugsweise 0,2 bis 4 Gew.-% und insbesondere 0,5 bis 2 Gew.-% mindestens eines Farbstoffs der Formel III, wobei die Summe der Einzelkomponenten jeweils 100 Gew.-% ergibt.

Farbstoffzubereitungen können neben den Farbstoffmischungen noch weitere Bestandteile aufweisen, z.B.
- Abschwächungs- oder Stellmittel zur Einstellung definierter Farbstärke, welche vorzugsweise vorgemahlen zugesetzt werden, wie Lithiumchlorid, Natriumchlorid, Kaliumchlorid, wasserfreies Natriumsulfat oder Dextrin, in einer Menge von 5 bis 80 Gew.-%, jeweils bezogen auf das Gewicht der Farbstoffzubereitung,
- Netzmittel zur Verbesserung der Redispergierbarkeit von pulverförmigen Farbmitteln oder Farbmittelantrocknungen, wie Sulfobernsteinsäurealkylester, Dialkylsulfimide, Phosphorsäurealkylester oder Fettalkoholalkoxylate, in einer Menge von 0,1 bis 1 Gew.-%, jeweils bezogen auf das Gewicht der Farbstoffzubereitung,
- Entstaubungsmittel zur Vermeidung der Staubbildung beim Umgang mit pulverförmigen Farbmittelzubereitungen, insbesondere Mischungen aus einer Ölkomponente und einem geeigneten Emulgatorsystem, in einer Menge von 0,1 bis 3 Gew.-%, jeweils bezogen auf das Gewicht der Farbstoffzubereitung,
- einen oder mehrere Farbstoffe mit brauner, roter, rotbrauner, blauer, violetter oder grüner Nuance zur Einstellung eines rotstichigen, blaustichigen oder grünstichigen schwarzen Farbtons in einer Menge von 0,1 bis 5 Gew.-%, jeweils bezogen auf das Gewicht der Farbstoffzubereitung,
wobei sie Summe der Einzelkomponenten jeweils 100 Gew.-% ergibt.

Als Farbstoff mit brauner, roter, rotbrauner, blauer, violetter oder grüner Nuance zur Einstellung eines rotstichigen, blaustichigen oder grünstichigen schwarzen Farbtons der Farbstoffmischung sind beispielsweise die handelsüblichen Farbstoffe
C.I. Acid Brown 97, C.I. Acid Red 310, C.I. Acid Red 283,
C.I. Acid Red 282, C.I. Acid Blue 254, C.I. Acid Blue 133,
C.I. Acid Blue 161 (15 706), C.I. Acid Blue 192,
C.I. Acid Blue 193 (15 707), C.I. Acid Blue 134,
C.I. Acid Violet 90 (18 762), C.I. Acid Violet 80,
C.I. Acid Green 26 oder C.I. Acid Green 68:1 geeignet, welche
in Form der Natrium-, Kalium- oder Lithiumsalze angewandt werden können.

Hervorzuheben sind Farbstoffzubereitungen, enthaltend, jeweils bezogen auf das Gewicht der Farbstoffzubereitung, 10 bis 50 Gew.-%, vorzugsweise 10 bis 40 Gew.-% Farbstoff der Formel I, 15 bis 60 Gew.-%, vorzugsweise 15 bis 50 Gew.-% C.I. Sulphur Black 1 (53 185), 0,1 bis 5 Gew.-% vorzugsweise 0,2 bis 4 Gew.-% mindestens eines Farbstoffs der Formel II, 0,1 bis 5 Gew.-%, vorzugsweise 0,2 bis 4 Gew.-% mindestens eines Farbstoffs der Formel III sowie 0 bis 74,8 Gew.-%, vorzugsweise 0 bis 74,6 Gew.-% weitere Bestandteile, wobei die Summe der Einzelkomponenten jeweils 100 Gew.-% ergibt.

Von besonderem Interesse sind Farbstoffmischungen, die die Farbstoffe der Formel I, II und III in einem solchen Verhältnis enthalten, daß im Absorptionsspektrum der Mischung (I, II und III), gemessen bei einem pH-Wert von ca. 4 in Wasser, das Verhältnis der Absorptionsmaxima 464 bis 465 nm:605 bis 606 nm, 1,3 bis 1,4, vorzugsweise 1,36 bis 1,4 und insbesondere ca. 1,38 beträgt.

Die neuen Farbstoffmischungen können auf an sich bekannter Weise erhalten werden. Beispielsweise kann man die einzelnen Mischungspartner in den entsprechenden Gewichtsverhältnissen miteinander mischen. Es ist aber auch möglich, eine Mischung der Azofarbstoffe der Formel I, II und III durch Mischkupplung herzustellen und danach mit dem Farbstoff C.I. Sulphur Black 1 (53 185) abzumischen.

Der Farbstoff der Formel I ist z.B. in der US-A-4 479 906 beschrieben.

Der Farbstoff C.I. Sulphur Black 1 (53 185) ist handelsüblich.

Die Farbstoffe der Formeln II und III sind z.B. aus den älteren Patentanmeldungen DE-A-1 953 01 76 und DE-A-1 954 87 85 bekannt.

Die erfindungsgemäßen Farbstoffmischungen eignen sich in vorteilhafter Weise zum Färben von natürlichen oder synthetischen Substraten, beispielsweise von Wolle, Leder, Polyamid oder Papier (auch mittels des Ink-Jet-Verfahrens). Insbesondere sind sie zum Färben von Leder geeignet.

Man erhält Färbungen in grünstichigen, blaustichigen bis rotstichigen schwarzen Farbtönen mit guten Migrations- und Naßechtheiten. Insbesondere hervorzuheben ist das ausgezeichnete Durchfärbevermögen der neuen Farbstoffmischungen beim Färben von Leder.

Die folgenden Beispiele sollen die Erfindung näher erläutern.

Folgende Farbstoffe kamen zur Anwendung.

### Farbstoff Nr. 1

### Natriumsalz des Farbstoffs der Formel I

### Farbstoff Nr. 2

### Lithiumsalz des Farbstoffs der Formel I

### Farbstoff Nr. 3

### Kaliumsalz des Farbstoffs der Formel I

### Farbstoff Nr. 4

### Natriumsalz des Farbstoffs der Formel IId

### Farbstoff Nr. 5

### Lithiumsalz des Farbstoffs der Formel IId

### Farbstoff Nr. 6

### Kaliumsalz des Farbstoffs der Formel IId

### Farbstoff Nr. 7

### Natriumsalz des Farbstoffs der Formel IIId

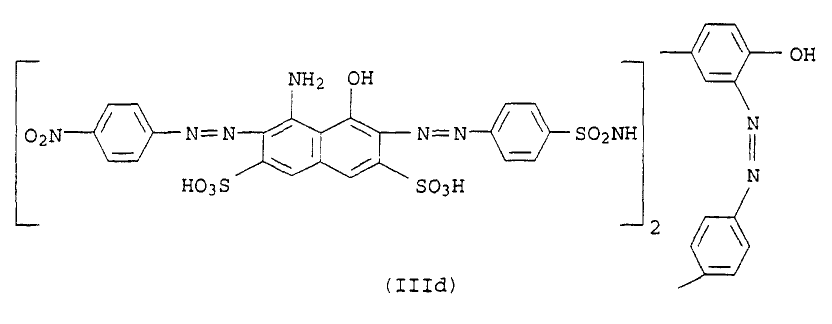

### Farbstoff Nr. 8

### Lithiumsalz des Farbstoffs der Formel IIId

### Farbstoff Nr. 9

### Kaliumsalz des Farbstoffs der Formel IIId

### Farbstoff Nr. 10

### Natriumsalz des Farbstoffs C.I. Sulphur Black 1 (53 185)

Die Salze der Farbstoffe Nr. 1 bis 9 wurden durch Sprühtrocknung der jeweiligen wäßrigen Lösungen erhalten.

Das Salz des Farbstoffs Nr. 10 wurde durch Schranktrocknung der wäßrigen Lösung und anschließender Trockenmahlung erhalten.

### Färbeverfahren für Rindoberleder

### (Die genannten Teile sind Gewichtsteile)

100 Teile eines in üblicher Weise gegerbten Leders mit einer Falzstärke von 2,2 mm wurden in 50 Teilen Wasser bei einer Temperatur von 40°C mit 2 Teilen Natriumformiat 0,5 Teilen Natriumhydrogencarbonat und 1 Teil Natriumacetat durch 180-minütiges Walken und anschließend nach Zugabe von 100 Teilen Wasser bei einer Temperatur von 30°C über Nacht in einem Walkfaß neutralisiert. Das Leder wird dann durch 10-minütiges Walken in 200 Teilen Wasser gewaschen.

Anschließend wird die Nachgerbung in 30 Teilen Wasser bei einer Temperatur von 30°C mit 13 Teilen eines handelsüblichen synthetischen Gerbmittels durchgeführt. Nachdem das Leder 65 min in der Nachgerbflüssigkeit gewalkt worden ist, wird die Färbung dann so vorgenommen, daß man 2 Teile Farbstoffzubereitung (ungelöst) zugibt und das Leder 120 min bei einer Temperatur von 25°C walkt, anschließend 150 Teile Wasser zugibt und es nochmals 10 min walkt. Nach Zugabe von 1 Teil konz. Ameisensäure walkt man weitere 30 min und läßt dann die Flotte ab. Das Leder wird dann gewaschen, indem man bei einer Temperatur von 40°C mit 200 Teilen Wasser versetzt und 10 min walkt. Danach wird die Flotte erneut abgelassen. Die Fettung wird in 100 Teilen Wasser bei einer Temperatur von 55°C durch Zugabe von 5 Teilen eines handelsüblichen Fett-Lickers und 40-minütiges Walken durchgeführt. Nach dem Ansäuern mit 1 Teil Ameisensäure walkt man weitere 40 min. Danach wird das Leder kalt gespült, ausgereckt, getrocknet, in Sägespäne eingelegt, gestollt und Vakuumgetrocknet.

### Beispiel 1

35 g Farbstoff Nr. 10,
35 g Farbstoff Nr. 1,
0,5 g Farbstoff Nr. 4,
0,3 g Farbstoff Nr. 7,
27,3 g vorgemahlenes wasserfreies Natriumsulfat und
2 g handelsübliches Entstaubungsmittel
wurden homogen vermischt.

Die Farbstoffmischung färbt Leder in blaustichig schwarzem Farbton.

### Beispiel 2

35 g Farbstoff Nr. 10,
35 g Farbstoff Nr. 2,
0,5 g Farbstoff Nr. 5,
0,5 g Farbstoff Nr. 8,
27 g vorgemahlenes wasserfreies Natriumsulfat und
2 g handelsübliches Entstaubungsmittel
wurden homogen vermischt.

Die Farbstoffmischung färbt Leder in blaustichig schwarzem Farbton.

### Beispiel 3

35 g Farbstoff Nr. 10,
35 g Farbstoff Nr. 3,
0,5 g Farbstoff Nr. 6,
0,5 g Farbstoff Nr. 9,
27 g vorgemahlenes wasserfreies Natriumsulfat und
2 g handelsübliches Entstaubungsmittel
wurden homogen vermischt.

Die Farbstoffmischung färbt Leder in blaustichig schwarzem Farbton.

### Beispiel 4

35 g Farbstoff Nr. 10,
32 g Farbstoff Nr. 1,
0,5 g Farbstoff Nr. 4
0,5 g Farbstoff Nr. 7,
3 g C.I. Acid Red 310,
27 g vorgemahlenes wasserfreies Natriumsulfat und
2 g handelsübliches Entstaubungsmittel
wurden homogen vermischt.

Die Farbstoffmischung färbt Leder in rotstichig schwarzem Farbton.

In analoger Weise werden die in der folgenden Tabelle aufgeführten Farbstoffzubereitungen erhalten und auf Rindoberleder ausgefärbt.

In der Tabelle sind jeweils die Bestandteile der Mischung sowie ihre Anteile (in Gew.-%) angegeben.

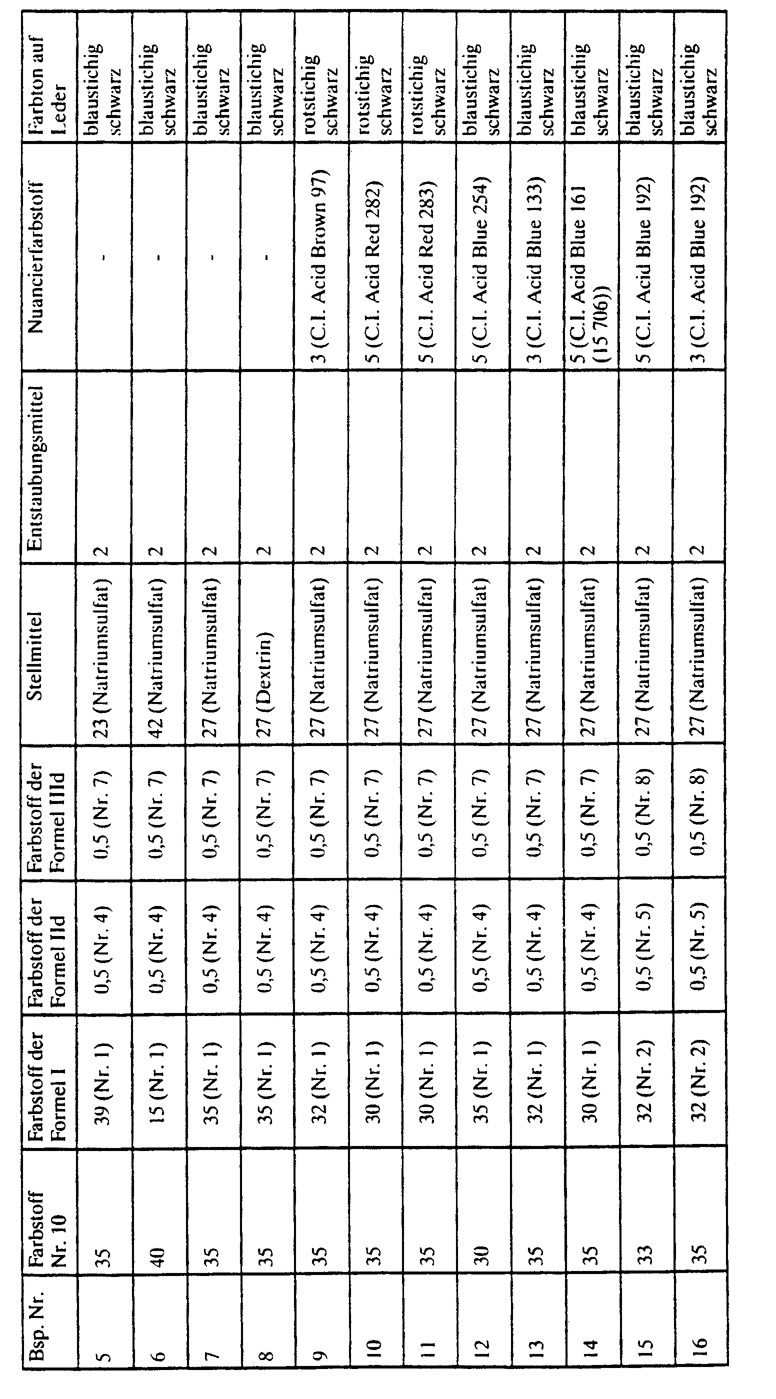

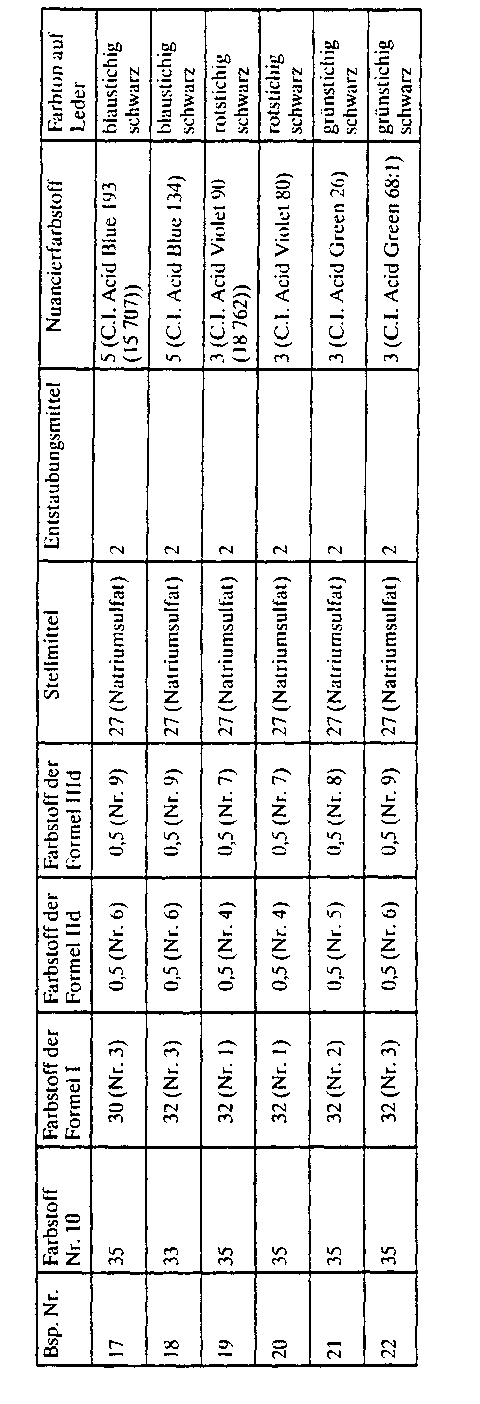

## Patentansprüche

1. Farbstoffmischungen, enthaltend den Farbstoff der Formel I 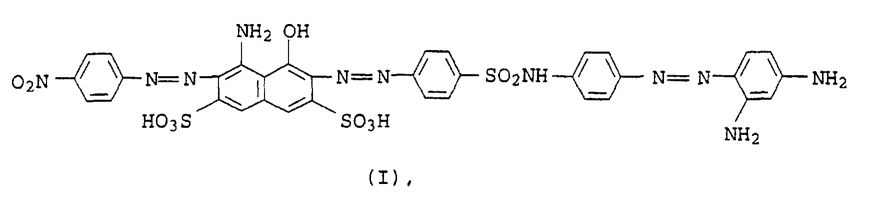 den Farbstoff C.I. Sulphur Black 1 (53 185), mindestens einen Disazofarbstoff der Formel II 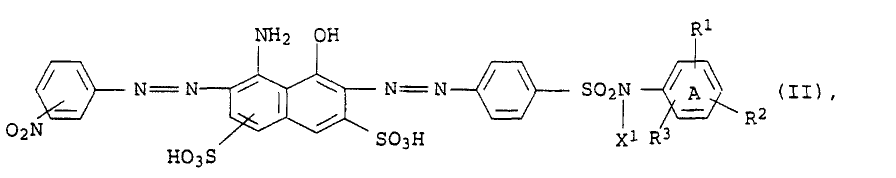 in der
der Ring A benzoanelliert sein kann,
X¹ Wasserstoff oder C₁-C₄-Alkyl,
R¹ Wasserstoff, C₁-C₄-Alkyl, Halogen, Carboxyl, C₁-C₄-Alkoxycarbonyl oder Hydroxysulfonyl,
R² Wasserstoff, C₁-C₄-Alkyl, Halogen, Carboxyl oder C₁-C₄-Alkoxycarbonyl oder R¹ und R² zusammen einen Rest der Formel L¹-NZ¹-CO, worin L¹ für Methylen oder Carbonyl und Z¹ für C₁-C₄-Alkyl, das durch C₁-C₄-Alkoxy substituiert sein kann, oder gegebenenfalls durch C₁-C₄-Alkyl oder C₁-C₄-Alkoxy substituiertes Phenyl stehen, und
R³ Wasserstoff, C₁-C₄-Alkyl, Hydroxy, C₁-C₄-Alkoxy, Phenoxy, C₁-C₄-Alkanoyloxy oder Benzoyloxy bedeuten,
sowie mindestens einen Polyazofarbstoff der Formel III 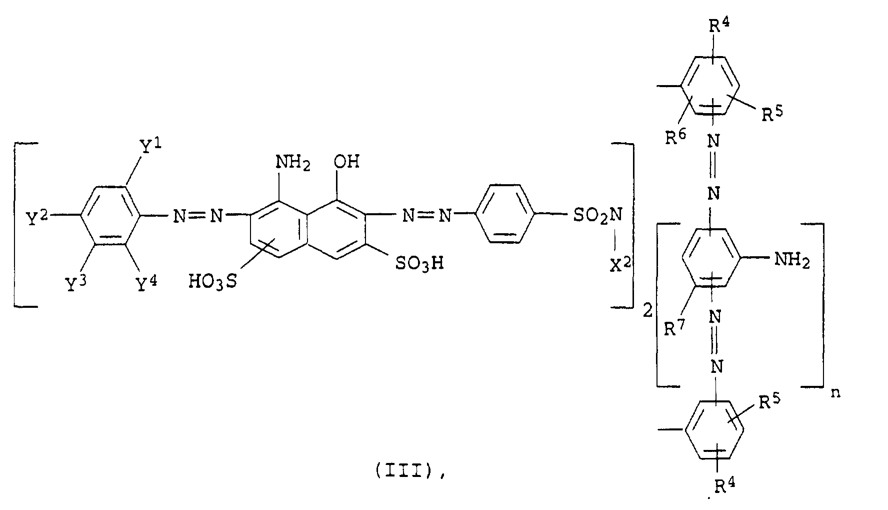 in der
n 0 oder 1,
Y¹ Wasserstoff, Hydroxysulfonyl, Pyrrolidinylsulfonyl, Piperidinylsulfonyl, Morpholinylsulfonyl oder einen Rest der Formel SO₂-Alk, SO₂-Ar, SO₂-N(Alk)₂, SO₂-N(Alk)Ar, SO₂-OAr, SO₂-C₂H₄-Q, SO₂-CH=CH₂, SO₂-CH₂CH=CH₂, CO-Ar, 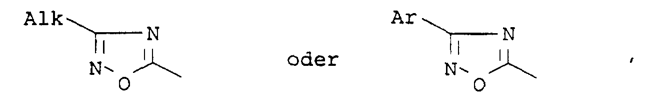
Y² Nitro, einen Rest der Formel SO₂-NHAr oder den Rest Y¹,
Y³ Wasserstoff, Hydroxysulfonyl, Pyrrolidinylsulfonyl, Piperidinylsulfonyl, Morpholinylsulfonyl oder einen Rest der Formel SO₂-Alk, SO₂-N(Alk)₂, SO₂-NHAlk, SO₂-CH₂COOH, SO₂-C₂H₄-Q, SO₂-CH=CH₂, SO₂-CH₂CH=CH₂, CO-Ar oder CO-NHAlk oder Y³ und Y² zusammen einen Rest der Formel L²-NZ²-CO oder L²-O-CO,
Y⁴ Wasserstoff oder Y⁴ und Y³ zusammen einen Rest der Formel L²-NZ²-CO,
X² Wasserstoff oder C₁-C₄-Alkyl,
R⁴ Wasserstoff, C₁-C₄-Alkyl, Halogen, Carboxyl, C₁-C₄-Alkoxycarbonyl oder Hydroxysulfonyl,
R⁵ Wasserstoff, C₁-C₄-Alkyl, Halogen, Carboxyl oder C₁-C₄-Alkoxycarbonyl oder R² und R¹ zusammen einen Rest der Formel L²-NZ²-CO,
R⁶ Wasserstoff, Hydroxy, C₁-C₄-Alkoxy, C₁-C₄-Alkanoyloxy oder Benzoyloxy und
R⁷ Wasserstoff, Amino oder Hydroxy bedeuten, wobei
Alk für C₁-C₈-Alkyl, das durch ein bis drei Sauerstoffatome in Etherfunktion oder durch ein Schwefelatom oder eine Sulfonylgruppe unterbrochen und durch Hydroxy, C₁-C₄-Alkanoyloxy, Benzoyloxy, Sulfato, Halogen, Cyano, Carboxyl oder Phenyl substituiert sein kann,
Ar für Phenyl, das durch C₁-C₄-Alkyl, C₁-C₄-Alkoxy, Halogen, Carboxyl, C₁-C₄-Alkanoylamino oder Hydroxysulfonyl substituiert sein kann,
L² für Methylen oder Carbonyl,
Z² für Wasserstoff, Naphthyl, C₅-C₈-Cycloalkyl oder einen Rest der Formel Alk oder Ar und
Q für Hydroxy oder eine unter alkalischen Reaktionsbedingungen abspaltbare Gruppe stehen.

2. Farbstoffmischungen nach Anspruch 1, enthaltend Disazofarbstoffe die der Formel IIa 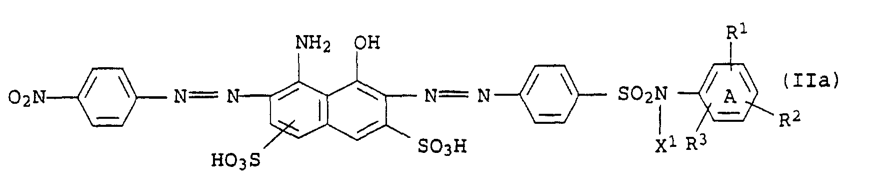 gehorchen, in der der Ring A, X¹, R¹, R² und R³ jeweils die in Anspruch 1 genannte Bedeutung besitzen.

3. Farbstoffmischungen nach Anspruch 1, enthaltend Disazofarbstoffe, die der Formel IIb 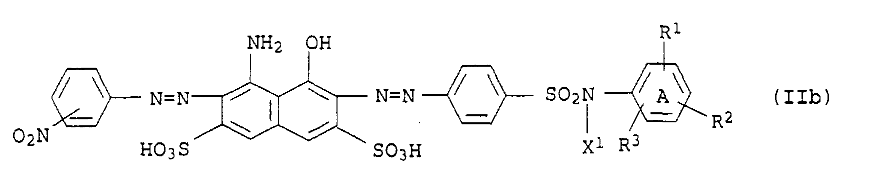 gehorchen, in der der Ring A, X¹, R¹, R² und R³ jeweils die in Anspruch 1 genannte Bedeutung besitzen.

4. Farbstoffmischungen nach Anspruch 1, enthaltend Polyazofarbstoffe, die der Formel IIIa 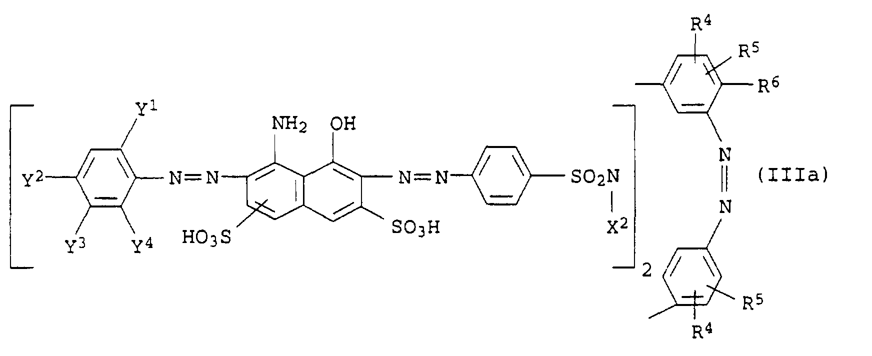 gehorchen, in der der Y¹, Y², Y³, Y⁴, X², R⁴, R⁵ und R⁶ jeweils die in Anspruch 1 genannte Bedeutung besitzen.

5. Farbstoffmischungen nach Anspruch 1, enthaltend Polyazofarbstoffe, die der Formel IIIb 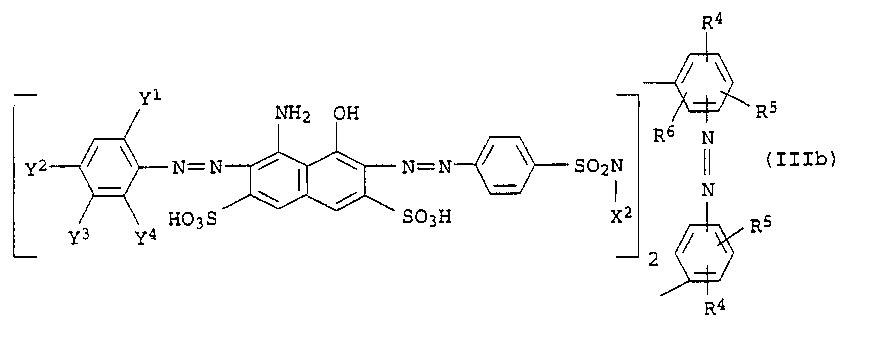 gehorchen, in der der Y¹, Y², Y³, Y⁴, X², R⁴, R⁵ und R⁶ jeweils die in Anspruch 1 genannte Bedeutung besitzen.

6. Farbstoffmischungen nach Anspruch 1, enthaltend, jeweils bezogen auf das Gewicht der Farbstoffmischung, 19 bis 60 Gew.-% Farbstoff I, 30 bis 80 Gew.-% C.I. Sulphur Black 1 (53 185), 0,1 bis 5 Gew.-% mindestens eines Farbstoffs der Formel II sowie 0,1 bis 5 Gew.-% mindestens eines Farbstoffs der Formel III.

7. Verwendung der Farbstoffmischungen gemäß Anspruch 1 zum Färben von natürlichen oder synthetischen Substraten.

## Claims

1. Dye mixtures comprising the dye of the formula I 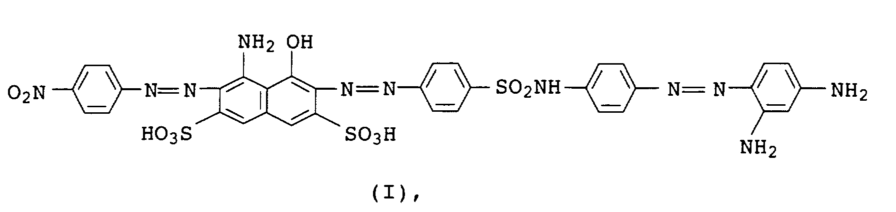 the dye C.I. Sulphur Black 1 (53 185), at least one disazo dye of the formula II 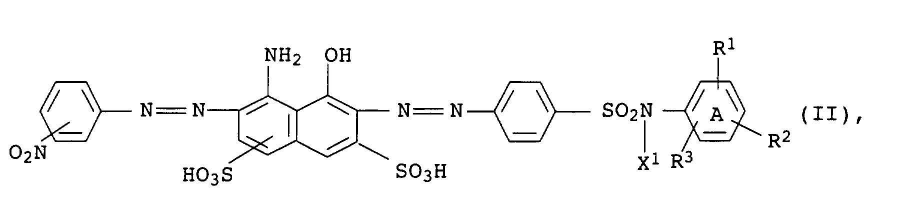 where
ring A may be benzofused,
X¹ is hydrogen or C₁-C₄-alkyl,
R¹ is hydrogen, C₁-C₄-alkyl, halogen, carboxyl, C₁-C₄-alkoxycarbonyl or hydroxysulfonyl,
R² is hydrogen, C₁-C₄-alkyl, halogen, carboxyl or C₁-C₄-alkoxycarbonyl, or R¹ and R² are together a radical of the formula L¹-NZ¹-CO, where L¹ is methylene or carbonyl and Z¹ is C₁-C₄-alkyl, unsubstituted or C₁-C₄-alkoxy-substituted, or unsubstituted or C₁-C₄-alkyl- or C₁-C₄-alkoxy-substituted phenyl, and
R³ is hydrogen, C₁-C₄-alkyl, hydroxyl, C₁-C₄-alkoxy, phenoxy, C₁-C₄-alkanoyloxy or benzoyloxy,
and at least one polyazo dye of the formula III 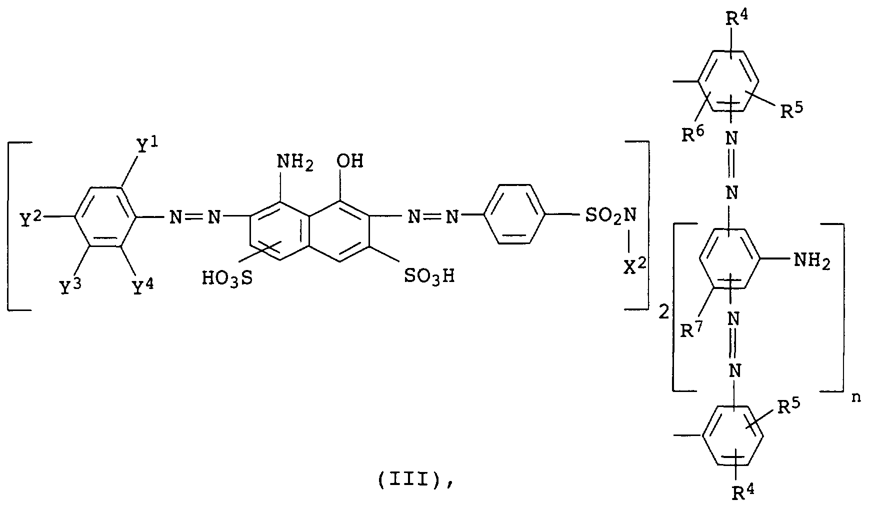 where
n is 0 or 1,
Y¹ is hydrogen, hydroxysulfonyl, pyrrolidinylsulfonyl, piperidinylsulfonyl, morpholinylsulfonyl or a radical of formula SO₂-Alk, SO₂-Ar, SO₂-N(Alk)₂, SO₂-N(Alk)Ar, SO₂-OAr, SO₂-C₂H₄-Q, SO₂-CH=CH₂, SO₂-CH₂CH=CH₂, CO-Ar, 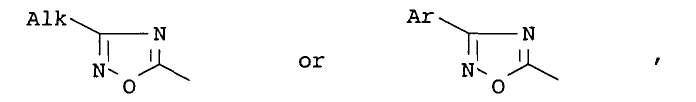
Y² is nitro, a radical of the formula SO₂-NHAr or the radical Y¹,
Y³ is hydrogen, hydroxysulfonyl, pyrrolidinylsulfonyl, piperidinylsulfonyl, morpholinylsulfonyl or a radical of formula SO₂-Alk, SO₂-N(Alk)₂, SO₂-NHAlk, SO₂-CH₂COOH, SO₂-C₂H₄-Q, SO₂-CH=CH₂, SO₂-CH₂CH=CH₂, CO-Ar or CO-NHAlk or Y³ and Y² are together a radical of formula L²-NZ²-CO or L²-O-CO,
Y⁴ is hydrogen, or Y⁴ and Y³ are together a radical of formula L²-NZ²-CO,
X² is hydrogen or C₁-C₄-alkyl,
R⁴ is hydrogen, C₁-C₄-alkyl, halogen, carboxyl, C₁-C₄-alkoxycarbonyl or hydroxysulfonyl,
R⁵ is hydrogen, C₁-C₄-alkyl, halogen, carboxyl or C₁-C₄-alkoxycarbonyl or R² and R¹ are together a radical of formula L²-NZ²-CO,
R⁶ is hydrogen, hydroxyl, C₁-C₄-alkoxy, C₁-C₄-alkanoyloxy or benzoyloxy,
R⁷ is hydrogen, amino or hydroxyl,
Alk is C₁-C₈-alkyl, with or without interruption by from one to three oxygen atoms in ether function or by a sulfur atom or by a sulfonyl group and with or without substitution by hydroxyl, C₁-C₄-alkanoyloxy, benzoyloxy, sulfato, halogen, cyano, carboxyl or phenyl,
Ar is phenyl, which is unsubstituted or substituted by C₁-C₄-alkyl, C₁-C₄-alkoxy, halogen, carboxyl, C₁-C₄-alkanoylamino or hydroxysulfonyl,
L² is methylene or carbonyl,
Z² is hydrogen, naphthyl, C₅-C₈-cycloalkyl or a radical of the formula Alk or Ar and
Q is hydroxyl or an alkali-detachable group.

2. Dye mixtures as claimed in claim 1, comprising disazo dyes conforming to the formula IIa 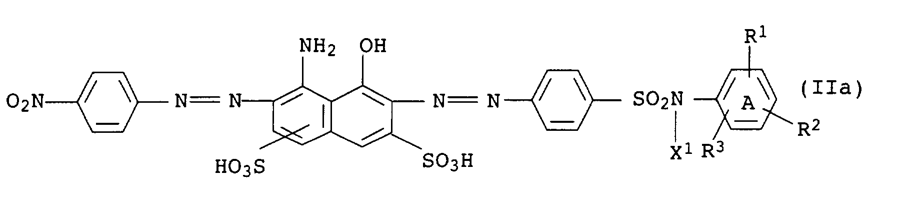 where the ring A, X¹, R¹, R² and R³ are each as defined in claim 1.

3. Dye mixtures as claimed in claim 1, comprising disazo dyes conforming to the formula IIb 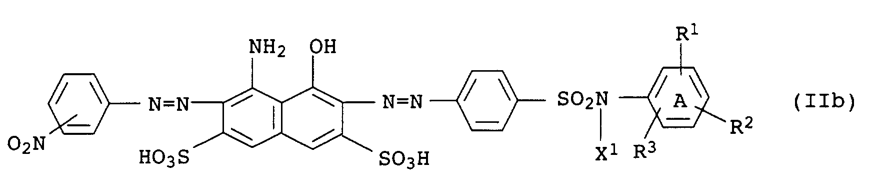 where the ring A, X¹, R¹, R² and R³ are each as defined in claim 1.

4. Dye mixtures as claimed in claim 1, comprising polyazo dyes conforming to the formula IIIa 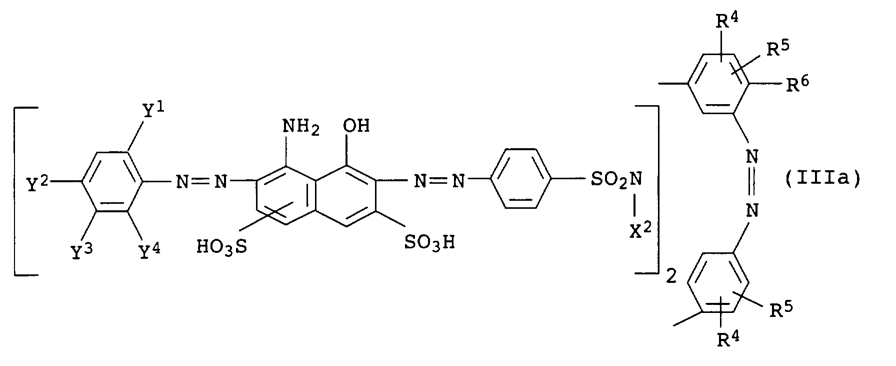 where Y¹, Y², Y³, Y⁴, X², R⁴, R⁵ and R⁶ are each as defined in claim 1.

5. Dye mixtures as claimed in claim 1, comprising polyazo dyes conforming to the formula IIIb 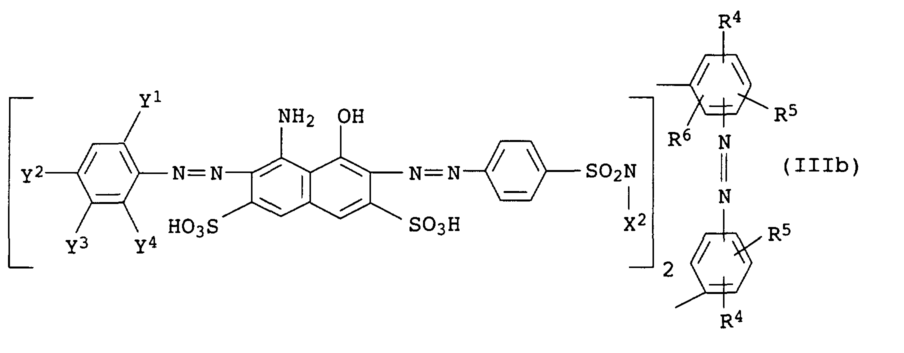 where Y¹, Y², Y³, Y⁴, X², R⁴, R⁵ and R⁶ are each as defined in claim 1.

6. Dye mixtures as claimed in claim 1, comprising, based on the weight of the dye mixture, from 19 to 60% by weight of dye I, from 30 to 80% by weight of C.I. Sulphur Black 1 (53 185), from 0.1 to 5% by weight of at least one dye of the formula II and from 0.1 to 5% by weight of at least one dye of the formula III.

7. The use of the dye mixtures of claim 1 for dyeing natural or sythetic substrates.

## Revendications

1. Mélanges de colorants contenant le colorant de formule I 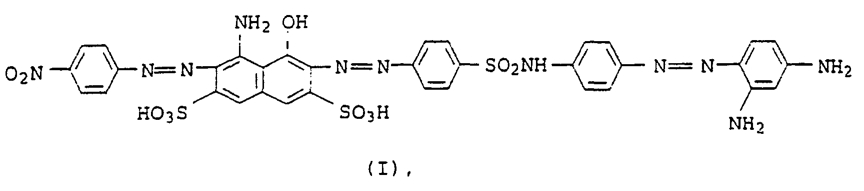 le colorant C.I. Sulphur Black 1 (53 185), au moins un colorant disazoïque de formule II 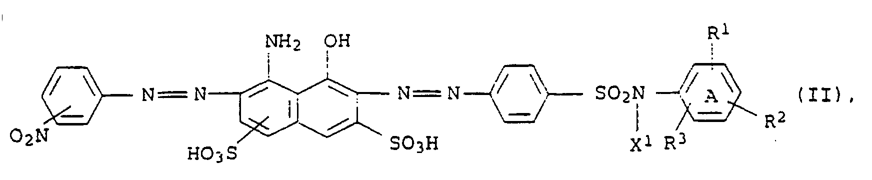 dans laquelle
le noyau A peut être benzocondensé,
X¹ est un atome d'hydrogène ou un groupe alkyle en C₁ à C₄,
R¹ est un atome d'hydrogène ou un groupe alkyle en C₁ à C₄, halogéno, carboxyle, (alcoxy en C₁ à C₄)carbonyle ou hydroxysulfonyle,
R² est un atome d'hydrogène ou un groupe alkyle en C₁ à C₄, halogéno, carboxyle ou (alcoxy en C₁ à C₄)carbonyle, ou encore R¹ et R² forment ensemble un radical de formule L¹-NZ¹-CO dans laquelle L¹ est un radical méthylène ou carbonyle et Z¹ est un groupe alkyle en C₁ à C₄ pouvant être substitué par des substituants alcoxy en C₁ à C₄, ou encore un groupe phényle éventuellement substitué par des substituants alkyle en C₁ à C₄ ou alcoxy en C₁ à C₄, et
R³ est un atome d'hydrogène ou un groupe alkyle en C₁ à C₄, hydroxy, alcoxy en C₁ à C₄, phénoxy, alcanoyloxy en C₁ à C₄ ou benzoyloxy,
ainsi qu'au moins un colorant polyazoïque de formule III 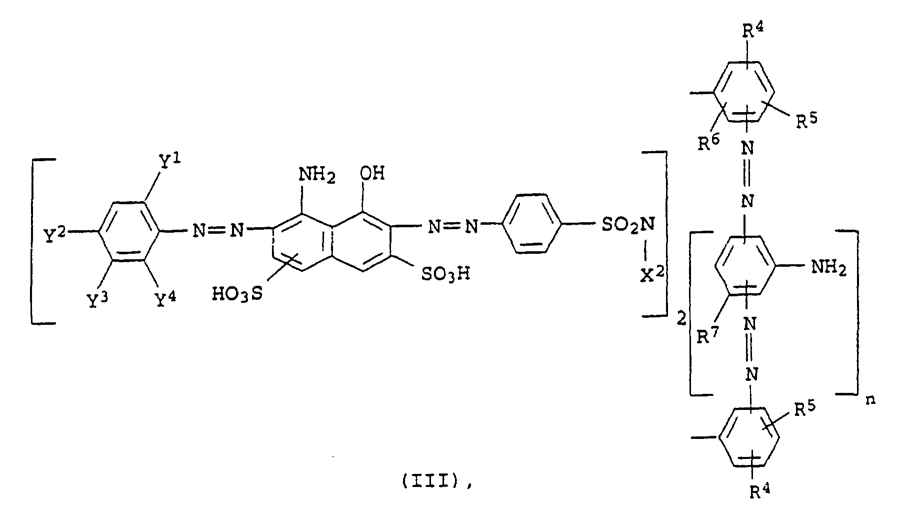 dans laquelle
n vaut 0 ou 1,
Y¹ est un atome d'hydrogène ou un groupe hydroxysulfonyle, pyrrolidinylsulfonyle, pipéridinylsulfonyle, morpholinylsulfonyle, ou un radical de formule SO₂-Alk, SO₂-Ar, SO₂-N(Alk)₂, SO₂-N(Alk)Ar, SO₂-OAr, SO₂-C₂H₄-Q, SO₂-CH=CH₂, SO₂-CH₂CH=CH₂, 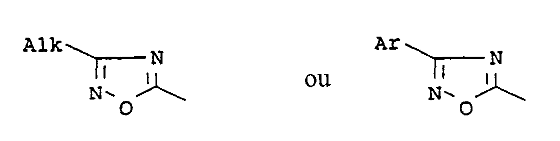
Y² est un groupe nitro, un radical de formule SO₂-NHAr, ou le radical Y¹,
Y³ est un atome d'hydrogène ou un groupe hydroxysulfonyle, pyrrolidinylsulfonyle, pipéridinylsulfonyle, morpholinylsulfonyle, ou un radical de formule SO₂-Alk, SO₂-N(Alk)₂, SO₂-NHAlk, SO₂-CH₂COOH, SO₂-C₂H₄-Q, SO₂-CH=CH₂, SO₂-CH₂CH=CH₂, CO-Ar ou CO-NHAlk, ou encore Y³ et Y² forment ensemble un radical de formule L²-NZ²-CO ou L²-O-CO,
Y⁴ est un atome d'hydrogène, ou encore Y⁴ et Y³ forment ensemble un radical de formule L²-NZ²-CO,
X² est un atome d'hydrogène ou un groupe alkyle en C₁ à C₄,
R⁴ est un atome d'hydrogène ou un groupe alkyle en C₁ à C₄, halogéno, carboxyle, (alcoxy en C₁ à C₄)carbonyle ou hydroxysulfonyle,
R⁵ est un atome d'hydrogène ou un groupe alkyle en C₁ à C₄, halogéno, carboxyle ou (alcoxy en C₁ à C₄)carbonyle, ou encore R² et R¹ forment ensemble un radical de formule L²-NZ²-CO,
R⁶ est un atome d'hydrogène ou un groupe hydroxy, alcoxy en C₁ à C₄, alcanoyloxy en C₁ à C₄ ou benzoyloxy, et
R⁷ est un atome d'hydrogène ou un groupe amino ou hydroxy, où
Alk représente un groupe alkyle en C₁ à C₈ qui peut être interrompu par un à trois atomes d'oxygène en fonction éther ou par un atome de soufre ou par un groupe sulfonyle, et qui peut être substitué par des substituants hydroxy, alcanoyloxy en C₁ à C₄, benzoyloxy, sulfato, halogéno, cyano, carboxyle ou phényle,
Ar est un groupe phényle pouvant être substitué par des substituants alkyle en C₁ à C₄, alcoxy en C₁ à C₄, halogéno, carboxyle, alcanoylamino en C₁ à C₄ ou hydroxysulfonyle,
L² est un radical méthylène ou carbonyle,
Z² est un atome d'hydrogène ou un groupe naphtyle, cycloalkyle en C₅ à C₈, ou un radical de formule Alk ou Ar, et
Q est un groupe hydroxy ou un groupe éliminable dans des conditions de réaction alcalines.

2. Mélanges de colorants selon la revendication 1, contenant des colorants disazoïques ayant la formule IIa 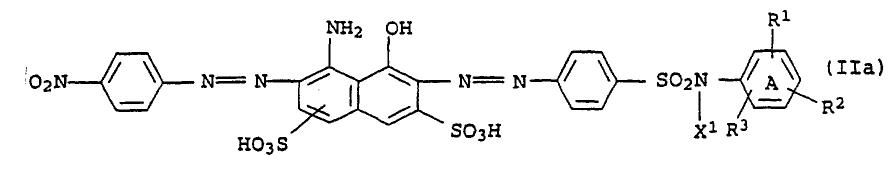 dans laquelle le noyau A, X¹, R¹, R² et R³ ont chacun les significations données dans la revendication 1.

3. Mélanges de colorants selon la revendication 1, contenant des colorants disazoïques de formule IIb 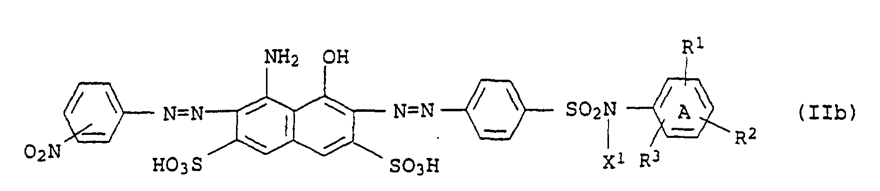 dans laquelle le noyau A, X¹, R¹, R² et R³ ont chacun les significations données dans la revendication 1.

4. Mélanges de colorants selon la revendication 1, contenant des colorants polyazoïques de formule IIIa 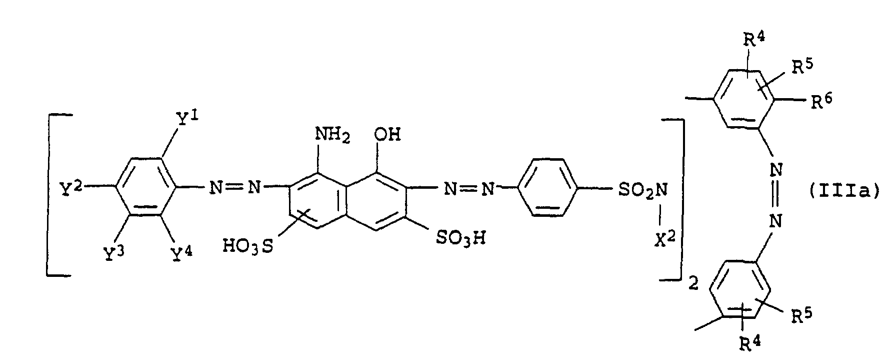 dans laquelle Y¹, Y², Y³, Y⁴, X², R⁴, R⁵ et R⁶ ont chacun les significations données dans la revendication 1.

5. Mélanges de colorants selon la revendication 1, contenant des colorants polyazoïques de formule IIIb 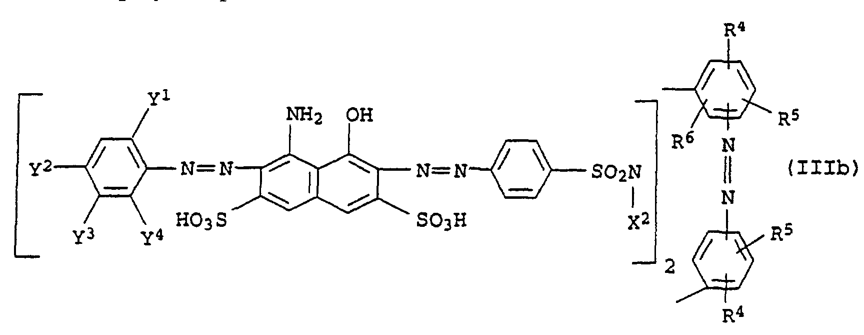 dans laquelle Y¹, Y², Y³, Y⁴, X², R⁴, R⁵ et R⁶ ont chacun les significations données dans la revendication 1.

6. Mélanges de colorants selon la revendication 1 contenant, dans tous les cas par rapport au poids du mélange de colorants, de 19 à 60 % en poids du colorant I, de 30 à 80 % en poids de C.I. Sulphur Black 1 (53 185), de 0,1 à 5 % en poids d'au moins un colorant de formule II et de 0,1 à 5 % en poids d'au moins un colorant de formule III.

7. Utilisation des mélanges de colorants selon la revendication 1 pour teindre des substrats naturels ou synthétiques.
